# EUROPÄISCHE PATENTSCHRIFT

(11) **EP 0 511 589 B1**
(45) Veröffentlichungstag und Bekanntmachung des Hinweises auf die Patenterteilung: **21.07.1999**
(21) Anmeldenummer: 92106958.9
(22) Anmeldetag: 23.04.1992
(51) Int. Cl.: C08G 64/18, D06M 15/513, C10M 107/32

(54) **Neue wasserlösliche, biologisch abbaubare Kohlensäurepolyester und ihre Verwendung als Präparations- und Gleitmittel für Synthesegarne**
Watersoluble, biodegradable carbonic acid polyesters and their use as finishing agent and lubricant for synthetic fibres
Polyesters d'acide carbonique, solubles dans l'eau et biodégradables et leur utilisation comme apprêt et lubrifiant pour des fibres synthétiques

(30) Priorität: 27.04.1991 DE 4113889
(43) Veröffentlichungstag der Anmeldung: 04.11.1992
(73) Patentinhaber: Stockhausen GmbH & Co. KG, 47805 Krefeld (DE)
(72) Erfinder: Peppmöller, Reinmar, W-4150 Krefeld (DE); Goossens, Bernhard, W-4179 Weeze (DE); Winck, Karl, W-4133 Neukirchen-Vluyn (DE)
(74) Vertreter: Wolff, Felix, Dr.

(56) Entgegenhaltungen:
- EP-A- 0 421 298

## Beschreibung

Die Erfindung betrifft neue wasserlösliche und biologisch abbaubare Kohlensäurepolyester (Polycarbonate) und ihre Verwendung als Präparations- und Gleitmittel für Synthesegarne.

Um synthetische Fasern und Garne aus Polyester, Polyamid, Polypropylen, Polyacrylnitril und auch Celluloseregenerat maschinell ohne Verschleiß und Bruch mit hoher Geschwindigkeit verarbeiten zu können, werden antistatisch wirkende, reibungsmindernde Öle mit geringer Flüchtigkeit und hohem Flammpunkt eingesetzt. Für diese "Spinnpräparationen" werden im allgemeinen als Grundkomponenten dünnflüssige, wasserunlösliche Mineralöle, Esteröle oder Polyether verwendet (z.B. US-PS 3,338,830), die mit Hilfe von Emulgatoren entsprechend den Einsatzanforderungen auf Wassermischbarkeit eingestellt werden.

Mit zunehmender Geschwindigkeit der maschinellen Verarbeitung synthetischer Fasern, insbesondere bei Einsatz unter den harten Bedingungen der Friktionstexturierung wurde der mechanischen und thermischen Stabilität von Faserpräparationen höhere Beachtung geschenkt. Unerwünschte Crackrückstände oder teerartige Ablagerungen auf den Heizschienenflächen bedeuten bei mineralölhaltigen Produkten häufig kostenintensive Störungen des Produktionsablaufs. Als Ausweg wurde ein bestimmter Typ eines Polyalkylenglykolethercarbonats vorgeschlagen (JP-PS 195437/83 bzw. EP-PS 0146234). Nach Struktur und Sythese konnten jedoch nur wasserunlösliche bzw. in Wasser emulgierbare Produkte erhalten werden. Als vorteilhaft erwies sich der Einsatz von in Wasser selbstemulgierenden Ethylen-(Propylen)-oxidaddukten der Fettalkohole, die als Block- oder Randomaddukte (mit Zufallssequenzen) vorliegen konnten. Ihnen fehlte jedoch aufgrund ihres Aufbaus sowohl die Netzwirkung als auch die biologische Abbaubarkeit.

Aufgabe der Erfindung war es daher, dünnflüssige, wasserlösliche und biologisch abbaubare Produkte mit hoher Netzwirkung und hoher thermischer Stabilität bereitzustellen, die als Spinnpräparationen, d. h. als Präparations- und Gleitmittel für Synthesegarne geeignet sind und bei ihrer Verwendung ohne Zusatz von Emulgatoren einen Rückgang der Bildung von teerartigen, klebrigen Ablagerungen bewirken.

Diese Aufgabe wird gelöst durch neue Kohlensäurepolyester der allgemeinen Formel: 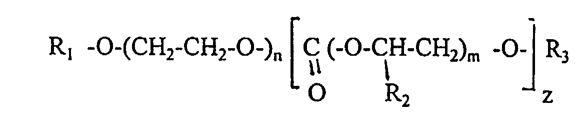 mit folgenden Bedeutungen:
R₁: linearer oder verzweigter, gesättigter oder einfach ungesättigter Alkylrest mit 5 bis 22 C-Atomen,
R₂: Wasserstoff oder Methylgruppe
R₃: Wasserstoff oder 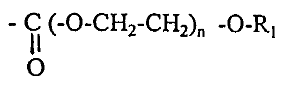
n: ganze Zahl von 0 bis 10,
m: ganze Zahl von 5 bis 16,
z: ganze Zahl von 1 bis 6,
wobei bei n = 0 oder 1 z = 2 oder 3 ist und die Polyalkylenglykolsequenz der Formel 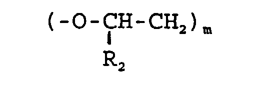 des Kohlensäurepolyesters aus Polyethylenglykol oder zu mindestens 80 Mol-% aus Ethylenoxid- und zu höchstens 20 Mol-% aus Propylenoxid-Einheiten besteht, dadurch gekennzeichnet, daß man primäre Alkohole oder Alkyl-(Poly-)ethylenglykolether und Polyethylenglykol oder ein gemischtes Polyethylen-Polypropylenglykol, das mindestens 80 Mol-% Ethylenoxid und höchstens 20 Mol-% Propylenoxid-Einheiten enthält, mit niedrigmolekularem Dialkylcarbonat, vorzugsweise Dimethyl- oder Diethylcarbonat, oder mit Phosgen kondensiert.

Die neuen, oligomeren, niedrigviskosen Kohlensäureester und Polyalkylenglykolen besitzen gegenüber den nach herkömmlichen Verfahren hergestellten Produkten einen niedrigeren Erstarrungspunkt, eine bei Raumtemperatur günstigere Konsistenz, eine bessere Hydrophilie, zeigen Netzwirkung und sind biologisch abbaubar.

Der Erfindung liegt die überraschende Erkenntnis zugrunde, daß durch die Einführung von Estergruppen in Form von Kohlensäureestergruppen die Kondensation von wasserunlöslichen primären Alkoholen und begrenzt wasserlöslichen Alkyl-poly-ethylenglykolethern solcher Alkohole mit Polyalkylenglykol so betrieben werden kann, daß eine Verstärkung der hydrophoben Eigenschaften, wie bei Esterbildungen allgemein üblich, ausbleibt und statt dessen wasserlösliche Verbindungen entstehen. Wie bei Polykondensaten üblich, wirkt der monofunktionelle, primäre Alkohol molmassenbegrenzend auf das Gesamtmolekül. Somit ergeben sich folgende Strukturen für die neue Faserpräparation:
a) vollständige Kondensation: 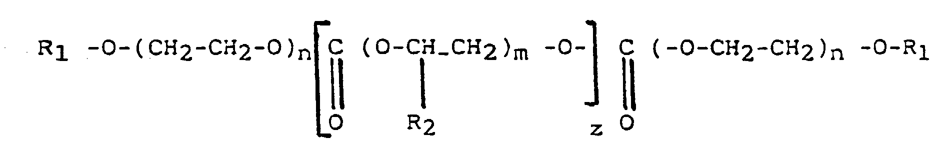
b) unvollständige Kondensation: 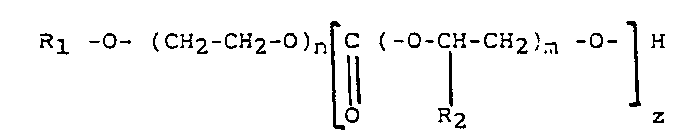 mit folgenden Bedeutungen:
   - R₁:: linearer oder verzweigter, gesättigter oder einfach ungesättigter Alkylrest mit 5 bis 22 C-Atomen,
   - R₂:: Wasserstoff oder Methylgruppe
   - n:: ganze Zahl von 0 bis 10,
   - m:: ganze Zahl von 5 bis 16,
   - z:: ganze Zahl von 1 bis 6,

Der im Polyalkylenglykoletherblock enthaltene Substituent R₂ kann, wenn-mehrmals vorhanden, jeweils gleich oder verschieden sein. Im letzteren Fall handelt es sich um Addukte von Ethylen- und Propylenoxid mit Block- oder Zufallssequenzen.

Das durch die vollständige Kondensation erhaltene Molekül läßt sich aüfteilen in einen zentralen, hydrophilen Block und zwei endständige, hydrophobe Reste. Hieraus erklärt sich die bevorzugte Verwendung von Polyethylenglykol als Kondensationskomponente. Addukte mit Propylenoxid enthalten mindestens zu 80 Mol-% Ethylenoxid, da sonst die Hydrophilie und damit die Netzwirkung des Polycarbonates zu stark geschwächt wird.

Die erfindungsgemäßen Kohlensäurepolyester lassen sich in einfacher Weise durch Umesterung von Kohlensäureestern niedrigsiedender Alkohole wie z.B. Dimethylcarbonat und Diethylcarbonat, mit Polyalkylenglykolen und höhermolekularen Alkoholen bzw. den entsprechenden Alkyl-(poly-)ethylen-glykolethern unter Alkalikatalyse gewinnen. Hierbei wird der niedrigmolekulare Alkohol über eine Fraktionierkolonne abdestilliert. Die Reaktion kann sowohl unter Vorlage von Teilmengen als auch direkt mit der gewünschten Mischung der Hydroxyverbindungen durchgeführt werden. So ist es möglich, zuerst höhermolekulares Dialkylcarbonat zu erzeugen und dieses alsdann weiter mit Polyalkylenglykol und niedrigmolekularem Dialkylcarbonat bis zum Gleichgewicht umzusetzen. Nach der Reaktion muß der alkalische Katalysator abfiltriert werden, da er im Produkt nicht löslich ist und eine Trübung erzeugt. Des ist ebenfalls ohne Probleme möglich, wenn ein Erdalkalioxid, wie z.B. CaO, als Umesterungskatalysator benutzt wird.

Andererseits kann die Darstellung der höhermolekularen Dialkylcarbonate bzw. der Polycarbonate großtechnisch bei vorhandener Sicherheitseinrichtung durch Phosgenierung der Alkohole und Polyalkylenglykole geschehen.

Zur Herstellung von Polyalkylenglykolen mit Alkylenoxid wird im allgemeinen ein Diol als Startsubstanz, im einfachsten Fall Wasser oder Ethylenglykol benutzt. Es kann jedoch auch jeder andere zweiwertige Alkohol, wie z.B. 1,2-Propandiol, 1,3-Propandiol, 1,2-Butandiol, 1,4-Butandiol, 1,6-Hexylenglykol, Diethylenglykolether oder Tri-ethylenglykolether eingesetzt werden.

Als Katalysator fungieren dabei 3asen wie Natriumhydroxid, Kaliumhydroxid oder auch Mischungen hiervon sowie besondere Metallkomplexe wie Kobalt-hexacyano-kobaltat. Die durchschnittliche Molmasse des zu verkettenden Polyethers wird auf den Maximalwert von 800 nach der OH-Zahl begrenzt, da höhermolekulare Addukte bei Mehrfachverkettung die Viskosität des Texturieröles unerwünscht ansteigen lassen.

Werden Polyalkylenglykole aus Ethylen- und Propylenoxid als Zentralblock eingesetzt, bestehen bezüglich der molekularen Struktur keinerlei Einschränkungen. Es können sowohl Blockals auch Randomaddukte benutzt werden, wobei jedes zweiwertige Diol die Zentraleinheit bilden kann.

Zur Molmassenterminierung der Fclyester sind synthetische, lineare und verzweigte primäre Alkohole mit mehr als sechs C-Atomen wie Hexanol, Octanol Nonanol, Decanol, Undecanol, Dodecanol, Tridecanol, Tetradecanol, Pentadecanol, Hexadecanol, Heptadecanol, Octadecanol, Nonadecanol, Eicosanol, Heneicosanol und Docosanol sowie die aus natürlichen Fetten gewonnenen, linearen Alkohole Capronalkohol, Önanthalkohol, Caprylalkohol, Pelargonalkohol, Caprinalkohol, Laurylalkohol, Myristylalkohol, Cetylalkohol, Stearylalkohol, Arachidylalkohol und Behenylalkohol als auch die einfach ungesättigten wie Oleylalkohol geeignet. Diese können sowohl in unveränderter Form als auch als Hydroxiethylether, dem Anlagerungsprodukt von Ethylenoxid, eingesetzt erden. Maximal können 10 Mole Ethylenoxid pro Mol Alkohol vorhanden sein. Darüber hinausgehende Mengen ergeben eine zu hohe Viskosität des Endproduktes.

Die erfindungsgemäßen, wasserlöslichen Polycarbonate können ohne Zusatz oder in Abmischung mit weiteren Komponenten als Gleitmittel und Präparation für Synthesefasern, besonders für den Verfahrensschritt der Friktionstexturierung eingesetzt werden. Gebräuchliche Zusatzkomponenten sind Antistatika, Korrosionsschutzmittel, Schaumdämpfungsmittel, Konservierungsmittel und eventuell Lösungsvermittler.

Die Applikation der Polycarbonate erfolgt direkt beim Spinnen der Fasern nach Verlassen des Spinnschachts durch Dosierpumpen oder Präparationswalzen. Man kann die Verbindungen in Substanz oder auch als wäßrige Lösung auftragen. Im Gegensatz zu den bisher gebräuchlichen Ölen sind aufgrund der guten Wasserlöslichkeit und der netzenden Eigenschaften Zusätze von Emulgatoren nicht mehr notwendig. Da es sich um biologisch voll abbaubare Kondensationsprodukte handelt, besteht auch keine Umweltgefährdung, wenn die erfindungsgemäße Präparation bei nachfolgenden Waschprozessen wieder teilweise von dem Fasergut abgespült wird. Die Behandlung des Abwassers kann folglich nach den gleichen Normen wie bei den handelsüblichen Wasch- und Reinigungsmitteln geschehen.

Mit der Erfindung werden die folgenden Vorteile erzielt: Aufgrund der gleichmäßigeren Faserbenetzung und Oberflächenbelegung ist gegenüber den bisher bekannten in Wasser emulgierbaren Ölen eine Verbesserung der Gleitwirkung vorhanden. Außerdem bedeutet die Verwendung eines wasserlöslichen und emulgatorfreien Öles gleichzeitig einen Rückgang der Bildung von teerartigen, klebrigen Ablagerungen an allen kritischen Maschinenteilen. Daraus ergibt sich, daß die Verarbeitungen von Fein- und Feinstgarnen erleichtert und die elektrostatischen Probleme bei hohen Geschwindigkeiten weiter verringert werden.

Die Erfindung wird durch die folgenden Beispiele näher erläutert:

### A) Herstellung der erfindungsgemäßen Kohlensäurepolyester

### Beispiel 1:

In einem Glaskolben, ausgerüstet mit Rührer, Rückflußkühler und Thermometer, wurden 240 g Decylalkohol (Alfol 10 der Fa. Condea AG) mit 150 g Dimethylcarbonat und 8 g Calciumoxid 2 Stunden unter Rückfluß erhitzt. Dann wurde der Kühler durch eine Rektifikationskolonne ausgetauscht und die Mischung langsam unter Rühren bis auf 100° C erhitzt. Das aus der Umesterungsreaktion freiwerdende Methanol wurde zusammen mit begleitendem Dimethylcarbonat am Kopf der Kolonne aufgefangen. Anschließend wurden 600 g Polyethylenglykol der Molmasse 400 und nochmals 100 g Dimethylcarbonat zugesetzt. Die Mischung wurde wiederum 2 Stunden unter Rückfluß erhitzt und dann die Temperatur bis auf 120°C erhöht, wobei weitere Mengen eines Methanol/Dimethylcarbonat-Gemisches überdestillierten. Zum Schluß wurde kurzzeitig Vakuum angelegt. Nach Abkühlung auf Raumtemperatur wurde das Reaktionsprodukt filtriert. Es stellte sich als klares, farbloses und dünnflüssiges Öl dar.

### Beispiel 2:

In einer Glasapparatur entsprechend Beispiel 1 wurden 365 g oxethyliertes Decanol (2 Mole Ethylenoxid an Alfol 10 der Fa. Condea AG angelagert) mit 150 g Dimethylcarbonat und 8 g Calciumoxid unter Rühren langsam zuerst unter Rückfluß und dann bis auf 100°C erhitzt, wobei freiwerdendes Methanol zusammen mit Dimethylcarbonat abdestillierte. Danach wurden 600 g Polyethylenglykol (Molmasse 400) und 100 g Dimethylcarbonat zugesetzt und die Mischung wie in Beispiel 1 behandelt. Nach Abfiltrieren des Katalysators resultierte ein klares, dünnflüssiges und farbloses Öl.

### Beispiel 3 und folgende:

Die Reaktionsbedingungen und die molaren Verhältnisse der Reaktanten zueinander entsprachen den obigen Angaben. Die mit Dimethylcarbonat kondensierten Komponenten sind der nachfolgenden Tabelle 1 zu entnehmen.

**Tabelle 1:**

| | Reaktant 1 | Reaktant 2 |
|---|---|---|
| Beispiel 3 | PEG 400 | 4 EO - ALFOL 10 |
| Beispiel 4 | PEG 600 | n-Dodecylalkohol |
| Beispiel 5 | PEG/PPG 600 (80/20, Random) | 2 EO-ALFOL 10 |

### Vergleich einiger Produktdaten mit Standard:

**Tabelle 2:**

| Faserpräparation | Standard* | 1 | 2 | 3 | 4 | 5 |
|---|---|---|---|---|---|---|
| Viskosität (Brookfield, mPa*s) | 180 | 150 | 150 | 160 | 170 | 170 |
| Oberflächenspannung (mN/m,10%) | 29 | 30 | 29 | 29 | 29 | 30 |
| Löslichkeit in Wasser (10 %ig) | -----------------------klar----------------- | | | | | |
| Crackrückstand (220°C, 24h, % ) | 1 | 1 | 1 | 1 | 1 | 1 |

| | | | | | | |
|---|---|---|---|---|---|---|
| Standard* = Puropol FT 509 (Fa. Stockhausen GmbH). Da das Produkt selbst nicht oberflächen- bzw. grenzflächenaktiv, wurden 2 % eines nichtionischen Netzmittels (oxethylierter Fettalkohol, Intrasol FA 1218/10) zugesetzt. | | | | | | |

### B) Anwendung als Spinnpräparation:

a) Messung des Reibungskoeffizienten:
PES-Filamente (Terepthalat, 167 dtex 32 f) wurden mit Polycarbonat nach Beispielen 1 bis 5 aus wäßriger Lösung so präpariert, daß eine Ölauflage von 0,5 % resultierte.
Nach 24 stündiger Klimatisierung bei 20°C und 65 % relativer Feuchte wurde mittels eines F-Meters (Fa.Rothschild) der Koeffizient der Gleitreibung ermittelt, wobei der Reibkörper aus verchromten und poliertem Stahl bestand.
Reibungskoeffizient bei einer Vorspannung von 17cN:
Reihe 1: Faser/Metall (50 m/min); Umschlingungswinkel 180°.
Reihe 2: Faser/Faser (20 m/min); Umschlingungswinkel 6 x 180°.

| | Standard | 1 | 2 | 3 | 4 | 5 |
|---|---|---|---|---|---|---|
| 1) | 0,41 | 0,40 | 0,40 | 0,41 | 0,41 | 0,41 |
| 2) | 0,31 | 0,31 | 0,30 | 0,30 | 0,31 | 0,31 |

b) Herstellung von Polyester-POY (Titer: 290 dtex 32 f):
Die Aufbringung der Präparation erfolgte unmittelbar nach dem Austritt des geschmolzenen Polymers aus der Spinndüse im Spinnschacht durch Dosierung einer 10 %igen, wäßrigen Lösung mittels dosierpumpen.
Die Aufwickelgeschwindigkeit betrug 3200 m/min. Die Präparationsauflage auf dem POY-Material betrug 0,4 %.
c) Friktionstexturierung (Endtiter 167 dtex 32 f):
Die Texturierung wurde unter folgenden Bedingungen ausgeführt;

| | |
|---|---|
| Heizerlänge | 2,0 m |
| Heizertemperatur | 210 °C |
| Kühlplatte | 1,5 m |
| Friktionsaggregat | 8 Keramikscheiben |
| Abzugsgeschwindigkeit | 700 m/min |
| D/Y -Verhältnis | 2,2 |
| Streckverhältnis | 1,608 |

Anschließend wurden folgende Meßwerte erhalten:

| | | Standard | Beispiele 1 bis 5 | | | | |
|---|---|---|---|---|---|---|---|
| | | | 1 | 2 | 3 | 4 | 5 |
| Festigkeit (cN/dtex): | | 3,63 | 3,65 | 3,66 | 3,64 | 3,66 | 3,64 |
| Dehnung (%): | | 25,0 | 25,0 | 25,1 | 25,1 | 25,2 | 25,1 |
| Kochschrumpf (%): | | 8,5 | 8,7 | 8,7 | 8,6 | 8,7 | 3,6 |
| Crimp | E (%) | 41,2 | 41,1 | 41,2 | 41,2 | 41,2 | 41,1 |
| | K (%) | 24,7 | 24,9 | 24,9 | 24,8 | 24,7 | 24,8 |

Nach 10 Tagen Dauerbetrieb unter den Testbedingungen waren keine Ablagerungen im Heizer vorhanden.
d) Biologische Abbaufähigkeit:
Zur Prüfung der biologischen Abbau fähigkeit wurden das Standardprodukt und die Polycarbonate nach den Beispielen 1 bis 5 dem Simulationstest ("Confirmatory Test" nach OECD) unterworfen. Nach 28 Tagen wurden folgende Resultate erhalten:

| | Standard | Beispiele 1 bis 5 |
|---|---|---|
| biolog. Abbau (%) | 20 | 80 |

### Beispiele 6 bis 10

6) In einer Glasapparatur entsprechend Beispiel 1 wurden 366 g n-Hexanol (6 Mole Ethylenoxid angelagert) mit 150 g Dimethylcarbonat und 8 g Calciumoxid erhitzt. Nach 2 Stdn. wurden 600 g Polyethylenglykol (M = 400) und nochmals 220 g Dimethylcarbonat zugesetzt. Die Mischung wurde wiederum 2 Stdn. unter Rückfluß erhitzt und dann das Azeotrop von Methanol und Dimethylcarbonat abdestilliert. Zum Schluß wurde noch kurzzeitig Vakuum angelegt. Nach dem Abkühlen wurde das Reaktionsprodukt filtriert. Es stellte sich als klares, helles, wasserlösliches Öl dar.
7) Wie in Beispiel 6 wurden 482 g 2-Ethylhexanol (8 Mole Ethylenoxid angelagert) mit 300 g Polyethylenglykol (M = 600) und insgesamt 210 g (150/60) Dimethylcarbonat umgesetzt. nach Destillation des Azeotrops und Abtrennung des Katalysators wurde ein helles Öl erhalten, das bei Lagerung geringe Mengen eines festen Bodensatzes bildete.
8) Wie in Beispiel 6 wurden 620 g Oleylalkohol (Ocenol 60/65 der Fa. Henkel KGaA), umgesetzt mit 8 Molen Ethylenoxid, mit 150 g Dimethylcarbonat und 8 g Calciumoxid erhitzt. Dann wurden 1200 g Polyethylenglykol (M = 600) und nochmals 220 g Dimethylcarbonat zugesetzt und das freiwerdende Methanol als Azeotrop abdestilliert. Nach Filtration des Produktes bei 60 °C wurde ein bei Raumtemperatur weiches, wasserlösliches Wachs erhalten.
9) Wie in Beispiel 6 wurden 422 g n-Decanol (Alfol 10 der Fa. Condea AG), umgesetzt mit 6 Molen Ethylenoxid, mit 600 g Polyethylenglykol (M = 200) und 450 g Dimethylcarbonat (150/300) erhitzt. Nach Destillation des Azeotrops und Abtrennung des Katalysators wurde ein helles, dünnflüssiges, wasserlösliches Öl erhalten.
10) Wie in Beispiel 6 wurden 756 g n-Behenylalkohol (10 Mole Ethylenoxid angelagert) mit 1200 g Polyethlenglykol (M = 600) und insgesamt 370 g Dimethylcarbonat umgesetzt. Nach der Aufarbeitung bei 60 °C wurde ein helles wasserlösliches Wachs erhalten.

### Prüfergebnisse zu den Beispielen 6 bis 10:

| Faserpräparation | 6 | 7 | 8 | 9 | 10 |
|---|---|---|---|---|---|
| Viskosität (Brookf.,mPa*s) | 180 | 150 | fest | 210 | fest |
| Oberflächenspannung (mN/m,10%) | 29 | 28 | 29 | 30 | 30 |
| Löslichkeit in Wasser, 10 %ig | ----------------------klar --------------- | | | | |
| Crackrückstand (220°C,24 h,%) | 1 | 1 | 1 | 1 | 1 |

Reibungskoeffizient bei einer Vorspannung von 17 cN:

| | | 6 | 7 | 8 | 9 | 10 |
|---|---|---|---|---|---|---|
| 1) | | 0,41 | 0,41 | 0,39 | 0,40 | 0,39 |
| 2) | | 0,31 | 0,30 | 0,30 | 0,31 | 0,31 |
| | | | | | | |
| Festigkeit: | | 3,65 | 3,62 | 3,66 | 3,65 | 3,63 |
| (cN/dtex) | | | | | | |
| Dehnung (%): | | 25,1 | 25,3 | 25,0 | 25,1 | 25,2 |
| Kochschrumpf (%): | | 8,6 | 8,7 | 8,5 | 8,6 | 8,7 |
| Crimp | E (%): | 41,2 | 41,1 | 41,1 | 41,2 | 41,1 |
| | K (%): | 24,8 | 24,9 | 24,8 | 24,7 | 24,8 |
| Biol. Abbau (%): | | ------------->80 ------------ | | | | |

### Größe der Koeffizienten n, m und z in den Beispielen 1 bis 10:

| Beispiel | 1 | 2 | 3 | 4 | 5 | 6 | 7 | 8 | 9 | 10 |
|---|---|---|---|---|---|---|---|---|---|---|
| n | 0 | 2 | 4 | 0 | 2 | 6 | 8 | 8 | 6 | 10 |
| m | 9 | 9 | 9 | 14 | 13,5 | 9 | 14 | 14 | 5 | 14 |
| z | 2 | 2 | 2 | 2 | 2 | 3 | 1 | 4 | 6 | 4 |

## Patentansprüche (Patentansprüche für folgende(n) Vertragsstaat(en): AT, BE, CH, DE, DK, FR, GB, GR, IT, LI, LU, MC, NL, PT, SE)

1. Wasserlösliche, biologisch abbaubare Kohlensäurepolyester der allgemeinen Formel: 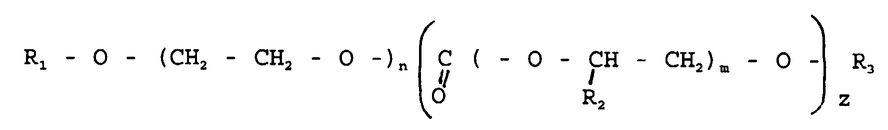 mit folgenden Bedeutungen:
R₁: linearer oder verzweigter, gesättigter oder einfach ungesättigter Alkylrest mit 6 bis 22 C-Atomen,
R₂: Wasserstoff oder Methylgruppe
R₃: Wasserstoff oder 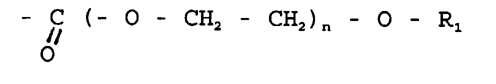
-n: ganze Zahl von 0 bis 10,
-m: ganze Zahl von 5 bis 16,
-z: ganze Zahl von 1 bis 6,
wobei bei n = 0 oder 1 z = 2 oder 3 ist und die Polyalkylenglykolsquenz der Formel 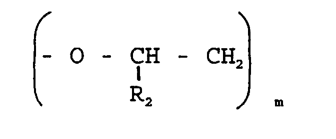 des Kohlensäurepolyesters aus Polyethylenglykol oder zu mindestens 80 Mol-% aus Ethylenoxid- und zu höchstens 20 Mol-% aus Propylenoxideinheiten besteht.

2. Kohlensäurepolyester nach Anspruch 1, dadurch gekennzeichnet, daß die Polyalkylenglykolsequenz der Formel 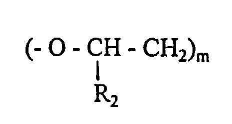 des Kohlensäurepolyesters aus einem mit Wasser oder einem Diol gestarteten Polyethylenglykol besteht.

3. Kohlensäurepolyester nach einem der Ansprüche 1 bis 2, dadurch gekennzeichnet, daß ihre 10 Gew.%ige wässrige Lösung die Oberflächenspannung des Wassers aufmindestens 35 mN/m herabsetzen.

4. Verfahren zur Herstellung von wasserlöslichen, biologisch abbaubaren Kohlensäurepolyestern nach den Ansprüchen 1 bis 3, dadurch gekennzeichnet, daß man primäre Alkohole oder Alkyl-(poly-)ethylenglykolether und Polyethylenglykol oder ein gemischtes Polyethylenpolypropylenglykol, das mindestens 80 Mol-% Ethylenoxid und höchstens 20 Mol-% Propylenoxideinheiten enthält, mit niedrigmolekularem Dialkylcarbonat, vorzugsweise Dimethyl - oder Diethylcarbonat, oder mit Phosgen kondensiert.

5. Verwendung der Kohlensäurepolyester nach einem der Ansprüche 1 bis 4 als Präparationsund Gleitmittel für Synthesefasern.

6. Verwendung der Kohlensäurepolyester nach Anspruch 5, dadurch gekennzeichnet, daß die Spinnpräparation zusätzlich zu den Kohlensäurepolyestern als weitere Komponenten Antistatika, Korrosionsschutzmittel, Schaumdämpfungsmittel, Konservierungsmittel und/oder Lösungsvermittler enthält.

## Patentansprüche (Patentansprüche für folgende(n) Vertragsstaat(en): ES)

1. Verfahren zur Herstellung von wasserlöslichen, biologisch abbaubaren Kohlensäurepolyestern der allgemeinen Formel: 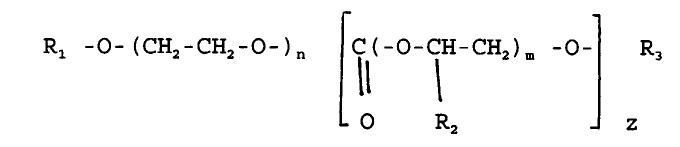 mit folgenden Bedeutungen:
R₁: linearer oder verzweigter, gesättigter oder einfach ungesättigter Alkylrest mit 6 bis 22 C-Atomen,
R₂: Wasserstoff oder Methylgruppe
R₃: Wasserstoff oder 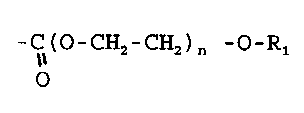
n: ganze Zahl von 0 bis 10,
m: ganze Zahl von 5 bis 10
z: ganze Zahl von 1 bis 6,
wobei bei n = 0 oder 1 z = 2 oder 3 ist und die Polyalkylenglykolsequenz der Formel 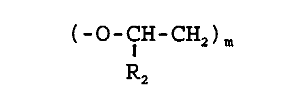 des Kohlensäurepolyesters aus Polyethylenglykol oder zu mindestens 80 Mol-% aus Ethylenoxid- und zu höchstens 20 Mol-% aus Propylenoxid-Einheiten besteht, dadurch gekennzeichnet, daß man primäre Alkohole oder Alkyl-(Poly-)ethylenglykolether und Polyethylenglykol oder ein gemischtes Polyethylen-Polypropylenglykol, das mindestens 80 Mol-% Ethylenoxid und höchstens 20 Mol-% Propylenoxid-Einheiten enthält, mit niedrigmolekularem Dialkylcarbonat, vorzugsweise Dimethyl- oder Diethylcarbonat, oder mit Phosgen kondensiert.

2. Verfahren nach Anspruch 1, dadurch gekennzeichnet, daß man eine Polyalkylenglykolsequenz der Formel 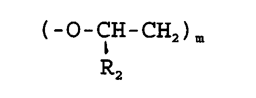 des Kohlensäurepolyesters aus einem mit Wasser oder einem Diol gestarteten Polyethylenglykol einsetzt.

3. Verfahren zur Herstellung eines Präparations- und Gleitmittels für Synthesefasern, dadurch gekennzeichnet, daß man den gemäß den Ansprüchen 1 bis 2 erhaltenen Kohlensäurepolyestern Antistatika, Korrosionsschutzmittel, Schaumdämpfungsmittel, Konservierungsmittel und/oder Lösungsvermittler als wesentliche Komponenten hinzufügt.

## Claims (Claims for the following Contracting State(s): AT, BE, CH, DE, DK, FR, GB, GR, IT, LI, LU, MC, NL, PT, SE)

1. Water-soluble, biodegradable carbonic acid polyesters of general formula: 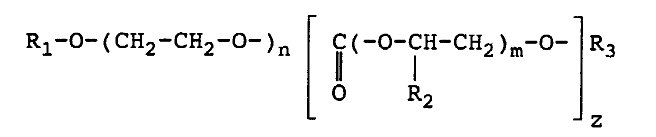 wherein
R₁ represents a linear or branched, saturated or mono-unsaturated alkyl residue having from 6 to 22 C atoms;
R₂ represents hydrogen or a methyl group;
R₃ represents hydrogen or 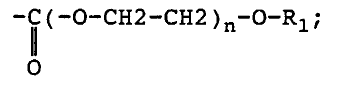
n represents an integer from 0 to 10;
m represents an integer from 5 to 16;
z represents an integer from 1 to 6;
and if n = 0 or 1, z = 2 or 3, and wherein the polyalkylene glycol sequence of formula 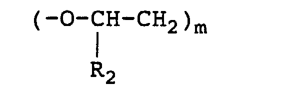 of the carbonic acid polyester consists of polyethylene glycol or at least 80 mole-% of ethylene oxide units and 20 mole-% at maximum of propylene oxide units.

2. The carbonic acid polyesters according to claim 1, characterized in that the polyalkylene glycol sequence of formula 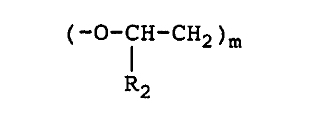 of the carbonic acid polyester consists of a polyethylene glycol initiated with water or a diol.

3. The carbonic acid polyesters according to one of claims 1 through 2, characterized in that a 10 wt.-% aqueous solution thereof will reduce the surface tension of water to at least 35 mN/m.

4. A process for the production of water-soluble, biodegradable carbonic acid polyesters according to claims 1 through 3, characterized in that primary alcohols or alkyl(poly)ethylene glycol ethers and polyethylene glycol, or a mixed polyethylene-polypropylene glycol containing at least 80 mole-% of ethylene oxide and 20 mole-% at maximum of propylene oxide units is condensed with a low molecular weight dialkyl carbonate, preferably dimethyl or diethyl carbonate, or phosgene.

5. Use of the carbonic acid polyesters according to one of claims 1 through 4 as finishing agents and lubricants for synthetic fibers.

6. The use of carbonic acid polyesters according to claim 5, characterized in that the spinning formulation, in addition to the carbonic acid polyesters, contains antistatic agents, corrosion-protective agents, antifoaming agents, preservatives, and/or solubilizers as further components.

## Claims (Claims for the following Contracting State(s): ES)

1. A process for the production of water-soluble, biodegradable carbonic acid polyesters of general formula: 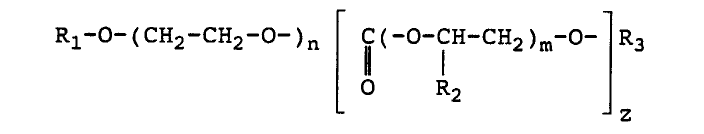 wherein
R₁ represents a linear or branched, saturated or mono-unsaturated alkyl residue having from 6 to 22 C atoms;
R₂ represents hydrogen or a methyl group;
R₃ represents hydrogen or 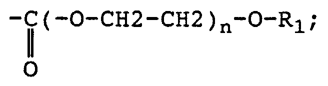
n represents an integer from 0 to 10;
m represents an integer from 5 to 10;
z represents an integer from 1 to 6;
and if n = 0 or 1, z = 2 or 3, and wherein the polyalkylene glycol sequence of formula 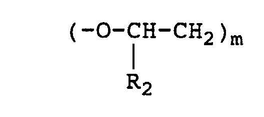 of the carbonic acid polyester consists of polyethylene glycol or at least 80 mole-% of ethylene oxide units and 20 mole-% at maximum of propylene oxide units, characterized in that primary alcohols or alkyl(poly)ethylene glycol ethers and polyethylene glycol, or a mixed polyethylene-polypropylene glycol containing at least 80 mole-% of ethylene oxide and 20 mole-% at maximum of propylene oxide units is condensed with a low molecular weight dialkyl carbonate, preferably dimethyl or diethyl carbonate, or phosgene.

2. The process of claim 1, characterized in that a polyalkylene glycol sequence of formula 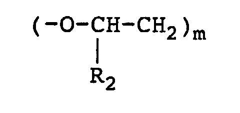 of the carbonic acid polyester of a polyethylene glycol initiated with water or a diol is used.

3. A process for the production of a finishing agent and lubricant for synthetic fibers, characterized in that antistatic agents, corrosion-protective agents, antifoaming agents, preservatives, and/or solubilizers are added as essential components to the carbonic acid polyesters obtained according to claims 1 - 2.

## Revendications (Revendications pour l'(les) Etat(s) contractant(s) suivant(s): AT, BE, CH, DE, DK, FR, GB, GR, IT, LI, LU, MC, NL, PT, SE)

1. Polyesters d'acide carbonique, solubles dans l'eau et biodégradables, de formule générale: 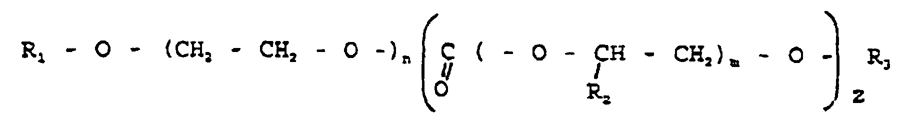 avec les significations suivantes:
R₁: radical alkyle linéaire ou ramifié, saturé ou mono-insaturé avec 6 à 22 atomes de carbone,
R₂: atome d'hydrogène ou radical méthyle,
R₃: atome d'hydrogène ou radical 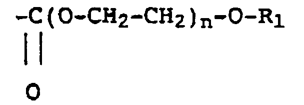
n: nombre entier de 0 à 10,
m: nombre entier de 5 à 16,
z: nombre entier de 1 à 6,
dans laquelle, pour n = 0 ou 1, z est égal à 2 ou 3 et la séquence de polyalkylène glycol de formule 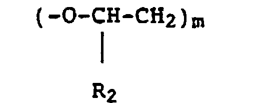 du polyester d'acide carbonique est constituée de polyéthylène glycol ou d'au moins 80% en moles d'unités d'oxyde d'éthylène et d'au maximum 20% en moles d'unités d'oxyde de propylène.

2. Polyesters d'acide carbonique selon la revendication 1, caractérisés en ce que l'on utilise une séquence de polyalkylène glycol de formule 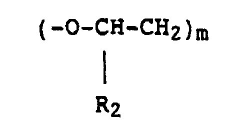 du polyester d'acide carbonique d'un polyéthylène glycol initialisé par de l'eau ou par un diol.

3. Polyesters d'acide carbonique selon l'une des revendications 1 à 2, caractérisés en ce que leur solution aqueuse à 10% en poids abaisse la tension superficielle de l'eau à 35 mN/m au minimum.

4. Procédé de préparation de polyesters d'acide carbonique solubles dans l'eau et biodégradables selon les revendications 1 à 3, caractérisé en ce que l'on condense des alcools primaires ou de l'alkyl-(poly)éthylène glycoléther et du polyéthylène glycol ou un polyéthylène/polypropylène glycol mixte contenant au minimum 80% en moles d'oxyde d'éthylène et au maximum 20% en moles d'unités d'oxyde de propylène, avec un carbonate de dialkyle à faible poids moléculaire, de préférence du carbonate de diméthyle ou de diéthyle, ou du phosgène.

5. Utilisation des polyesters d'acide carbonique selon l'une des revendications 1 à 4 comme apprêts et lubrifiants pour fibres synthétiques.

6. Utilisation des polyesters d'acide carbonique selon la revendication 5, caractérisée en ce que l'apprêt de filage contient, outre les polyesters d'acide carbonique, d'autres composants tels que des agents antistatiques, des agents de protection anticorrosion, des antimousses, des conservateurs et/ou des solubilisants.

## Revendications (Revendications pour l'(les) Etat(s) contractant(s) suivant(s): ES)

1. Procédé de préparation de polyesters d'acide carbonique, solubles dans l'eau et biodégradables, de formule générale: 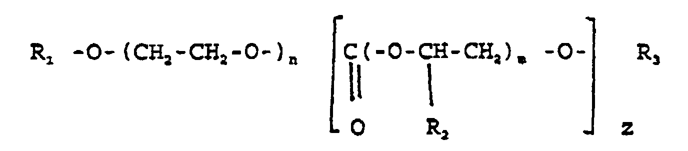 avec les significations suivantes:
R₁: radical alkyle linéaire ou ramifié, saturé ou mono-insaturé avec 6 à 22 atomes de carbone,
R₂: atome d'hydrogène ou radical méthyle,
R₃: atome d'hydrogène ou radical 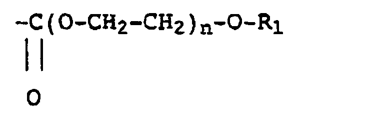
n: nombre entier de 0 à 10,
m: nombre entier de 5 à 16,
z: nombre entier de 1 à 6,
dans laquelle, pour n = 0 ou 1, z est égal à 2 ou 3 et la séquence de polyalkylène glycol de formule 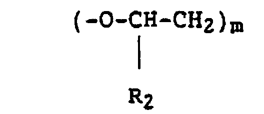 du polyester d'acide carbonique est constituée de polyéthylène glycol ou d'au moins 80% en moles d'unités d'oxyde d'éthylène et d'au maximum 20% en moles d'unités d'oxyde de propylène, caractérisé en ce que l'on condense des alcools primaires ou de l'alkyl-(poly)éthylène glycoléther et du polyéthylène glycol ou un polyéthylène/polypropylène glycol mixte contenant au minimum 80% en moles d'oxyde d'éthylène et au maximum 20% en moles d'unités d'oxyde de propylène, avec un carbonate de dialkyle à faible poids moléculaire, de préférence du carbonate de diméthyle ou de diéthyle, ou du phosgène.

2. Procédé selon la revendication 1, caractérisé en ce que l'on utilise une séquence de polyalkylène glycol de formule 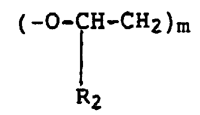 du polyester d'acide carbonique d'un polyéthylène glycol initialisé par de l'eau ou par un diol.

3. Procédé de préparation d'un apprêt et lubrifiant pour fibres synthétiques, caractérisé en ce que l'on ajoute essentiellement aux polyesters d'acide carbonique selon les revendications 1 et 2, des agents antistatiques, des agents de protection anticorrosion, des antimousses, des conservateurs et/ou des solubilisants.
